(19) Europäisches Patentamt
European Patent Office
Office européen des brevets

(11) **EP 2 635 882 B1**

## (12) EUROPÄISCHE PATENTSCHRIFT

(45) Veröffentlichungstag und Bekanntmachung des Hinweises auf die Patenterteilung:
**30.03.2016 Patentblatt 2016/13**

(21) Anmeldenummer: **11782047.2**

(22) Anmeldetag: **31.10.2011**

(51) Int Cl.:
*G01J 3/42* (2006.01)      *G01N 21/35* (2014.01)
*G01J 3/28* (2006.01)      *G01N 21/27* (2006.01)

(86) Internationale Anmeldenummer:
**PCT/EP2011/005495**

(87) Internationale Veröffentlichungsnummer:
**WO 2012/059210 (10.05.2012 Gazette 2012/19)**

(54) **VERFAHREN ZUR BESTIMMUNG VON CHEMISCHEN BESTANDTEILEN VON FESTEN ODER FLÜSSIGEN STOFFEN MITHILFE VON THZ-SPEKTROSKOPIE**

METHOD FOR DETERMINING CHEMICAL CONSTITUENTS OF SOLID OR LIQUID SUBSTANCES WITH THE AID OF THZ SPECTROSCOPY

PROCÉDÉ DE DÉTERMINATION DE CONSTITUANTS CHIMIQUES DE SUBSTANCES SOLIDES OU LIQUIDES PAR SPECTROSCOPIE THZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2010 DE 102010050198**

(43) Veröffentlichungstag der Anmeldung:
**11.09.2013 Patentblatt 2013/37**

(73) Patentinhaber: **Hübner GmbH**
**34123 Kassel (DE)**

(72) Erfinder:
 • HEISE, Michael
  58313 Herdecke (DE)
 • LAMPEN, Peter
  44269 Dortmund (DE)
 • NALPANTIDIS, Konstantinos
  58093 Hagen (DE)
 • PLATTE, Frank
  58119 Hagen-Hohenlimburg (DE)

(74) Vertreter: **Meinke, Dabringhaus und Partner GbR**
**Rosa-Luxemburg-Strasse 18**
**44141 Dortmund (DE)**

(56) Entgegenhaltungen:
**US-A1- 2010 211 329**

 • COLIN BAKER: "People screening using terahertz technology (Invited Paper)", PROCEEDINGS OF SPIE, Bd. 5790, 1. Januar 2005 (2005-01-01), Seiten 1-10, XP55015462, ISSN: 0277-786X, DOI: 10.1117/12.602976
 • LIU: "Detection and identification of explosive RDX by THz diffuse reflection spectroscopy", OPTICS EXPRESS, Bd. 14, Nr. 1, 1. Januar 2006 (2006-01-01) , Seite 415, XP55015477, ISSN: 1094-4087

**Beschreibung**

Die Erfindung betrifft ein Verfahren zur Bestimmung von chemischen Bestandteilen von festen oder flüssigen Substanzen mit Hilfe der THz-Spektroskopie, bei welchem die Substanzen durch die THz-Strahlung in Schwingungen versetzt und zumindest die reflektierten Strahlungsanteile detektiert werden und das jeweilige Reflexionsspektrum ausgewertet wird.

Die Terahertz-Spektroskopie hat in den letzten Jahren eine besondere Bedeutung erlangt, da für diesen Spektralbereich neue Strahlungsquellen und Detektoren entwickelt wurden. Für den seit vielen Jahrzehnten als fern-infrarot bekannten Spektralbereich wurden neue Anwendungen in der auf Molekülspektroskopie basierten chemischen Analytik und zur Charakterisierung von verschiedensten Materialien möglich gemacht ("Terahertz Spectroscopy: Henry M. Mantsch, Dieter Naumann, The renaissance of far infrared spectroscopy, Journal of Molecular Structure 964 (2010) 1-4; S.L. Dexheimer (Ed.), Terahertz Spectroscopy: Principles and Applications; CRS Press, New York, 2007"). Insbesondere steht seit einigen Jahren die sogenannte Time-Domain-Spektroskopie (TDS) zur Verfügung, mit der im Gegensatz zur konventionellen InfrarotSpektroskopie neben der Amplitude auch die Phase des Terahertz-Pulses gemessen wird, wodurch neben den spektralen Absorptionskoeffizienten durch geeignete mathematische Verfahren auch der spektrale Brechungsindex der Probe bestimmt werden kann.

Bestrahlt man eine Probe durch die Strahlung einer THz-Strahlungsquelle (oder Fern-IR-Strahlungsquelle), so kommt es zu einer Wechselwirkung zwischen Probe und der Strahlung. Die eintretende Strahlung bestimmter Frequenzen kann entweder transmittiert, reflektiert oder absorbiert werden, wobei je nach chemischen und optischen Eigenschaften die Anteile unterschiedlich sein können. Registriert man die mit der Probe wechselwirkenden Strahlungsanteile über einen größeren Frequenzbereich (auch als Spektralbereich bekannt), so erhält man für die Substanz charakteristische frequenzabhängige Dämpfungen der eingestrahlten spektralen Strahlungsintensitäten, die als sogenannter spektraler Fingerabdruck zur Verfügung stehen. Sollen an Proben Transmissionsmessungen gemacht werden, um diese zu analysieren, so müssen die Proben ausreichende Transmissionseigenschaften aufweisen, damit noch für eine Messung der spektralen Daten ausreichend hohe Strahlungsanteile detektiert werden können. Bei nichttransparenten Substanzen können den Proben zur Verdünnung Zusätze beigemischt werden, um die Absorption in einem bestimmten Frequenzintervall zu erniedrigen. Eine weitere Möglichkeit zur chemischen Charakterisierung von Substanzen ist die Analyse von Reflexionsspektren der bestrahlten Probe. Ein Vorteil dieses Verfahrens ist es, dass eine Probenvorbereitung nicht mehr notwendig ist. Werden solche Proben im Abstand von Metern unter normalen atmosphärischen Bedingungen gemessen, so kommt es zu einer störenden Überlagerung der Messsignale durch die Strahlungsabsorption des atmosphärischen Wasserdampfes, die in vielen schmalen Spektralintervallen zu einer vollständigen Absorption der Strahlung führen kann und die Qualität der Spektren der zu identifizierenden Substanz erheblich vermindert.

Zur Messung von Reflexionsspektren von Gefahrstoffen, wie z.B. Sprengstoff, sind verschiedene Lösungen bekannt. In der Zeitschrift "Appl. Phys. Lett. 93, 081906 (2008), M. Ortolani, J.S. Lee, U. Schade and H.-W. Hübers, Surface roughness effects on the terahertz reflectance of pure explosive materials") werden Reflexionsspektren in hoher Qualität beschrieben, jedoch sind dazu Strahlungsquellen aus einem Synchrotron notwendig, welches unter Praxisbedingungen nicht zur Verfügung steht. In der Veröffentlichung "Appl. Phys. Lett. 86, 241116 (2005), Y.C. Shen, T. Lo, P.F. Taday, B.E. Cole, W.R. Tribe and M.C. Kemp, Detection and identification of explosives using terahertz pulsed spectroscopic imaging") werden Reflexionsspektren von RDIX beschrieben, die jedoch nicht unter erschwerten atmosphärischen Messbedingungen gemessen wurden.

In US 2007/0114419 A1 ist ein Mess-Szenario dargestellt, in dem sogar Abstände von 50 m und mehr als möglich dargestellt werden. Die Machbarkeit wurde anhand von vier verschiedenen Explosivstoffen (Spektren gemessen in Reflexion und Transmission) und anderen Substanzen wie Seife, Mehl, Salz und Zucker untersucht. Eine Klassifizierung der Explosivstoffe wurde anhand einer Eigenschaftsreduktion (nämlich Variablenreduktion) und anschließender Hauptkomponentenanalyse (PCA) der Spektren vorgenommen. Angestrebt wurden 2bzw. 3-dimensionale Hauptkomponentendarstellungen für die Clusteranalyse hinsichtlich der Gruppe der Sprengstoffsubstanzen. Hier sollen statistische Wahrscheinlichkeitskriterien herangezogen werden, um die Zugehörigkeit zu den gesuchten kritischen Substanzen abzuschätzen. Die in dieser Schrift vorgestellte Chemometrie ist Stand der Technik. Einfache Klassifikatoren eignen sich jedoch nicht für die schwierige Aufgabe der Mustererkennung anhand der unter schlechten Randbedingungen aufgenommenen THz-Spektren der angesprochenen Substanzklassen. Durch verschiedene überlagerte Spektren, z.B. durch Spektrenanteile von über den kritischen Substanzen überlagerten Kleidungsstücken, bilden die THz-Spektren der Proben nach einer Spektren-Vorbehandlung und Eigenschaftsreduktion nicht zwangsläufig zusammenhängende Gebiete in dem niederdimensionalen Raum. Vielmehr gibt es mehrere Gebiete, die derselben Substanzklasse zuzuordnen sind. Ferner berücksichtigt dieses Verfahren auch nicht die Streuung bei Wiederhoiungsmessungen.

In US 2009/0101843 A1 ist eine mathematische Vorgehensweise zur Vorbehandlung von spektralen Daten dargestellt. Dabei werden neben anderen u.a. auch THz-Spektren benannt. Als besondere Anwendung wird die Fluoreszenzund Lifetime-Spektroskopie genannt.

Die Vorbehandlung zielt auf eine Hauptkomponentenanalyse (PCA) der Hintergrundspektren ab,-deren Vektoren zur Projektion des Probenspektrums in den komplementären Raum der Hintergrundspektren verwendet werden. Die so von Störkomponenten bereinigten Probenspektren können dann mit einem gleich behandelten Bibliotheksspektrum der gesuchten Substanz auf der Basis von Ähnlichkeitsmaßen verglichen werden. Es wird beispielsweise das Vektorskalarprodukt.verwendet, dessen Wert mit einem Schwellenwert verglichen wird, wobei die Werte für längennormierte Vektoren zwischen 0 und 1 (volle Kollinearität bei letzterem) liegen.

Orthogonale Signal-Korrekturen bei multivariaten Kalibrierungen sind nicht besonders gut, da letztlich die Dimensionskorrektur nicht zu Verbesserungen in der Vorhersagequalität führt, da die Rohdaten nur beispielsweise weitere PLS-Faktoren benötigen, die implizit zu einer Projektion mit Abstrahierung der Querempfindlichkeiten führt. Dies ist auch mit der Abhandlung der Net-AnalytTheorie verständlich ("C.D. Brown, Discordance between Net Analyte Signal Theory and Practical Multivariate Calibration, Anal. Chem. 2004, 76, 4364-4373"). Eine andere Vorgehensweise, bei der a priori Wissen über die Form des gesuchten Probenspektrums verwendet wird, ist die Science-based Calibration (SBC), die eine implizite Modellierung der Hintergrundstörsignale auf statistische Weise berücksichtigt ("H.H. Heise, P. Lampen, R. Marbach, Near-infrared reflection spectroscopy for non-invasive monitoring of glucose - established and novel strategies for multivariate calibration, Handbook of Optical Sensing of Glucose in Biological fluids and Tissues, V.V. Tuchin (Ed.), CRS Press, Chapter 5 (2008)"). Weiterer Stand der Technik ist in Baker et al., Proc. SPiE Vol. 5790 (2005), Seiten 1-10 offenbart.

Es ist bisher keine befriedigende Lösung zur automatischen Charakterisierung und Klassifizierung von festen oder flüssigen Substanzen mit Hilfe der THz-Spektroskopie unter erschwerten Randbedingungen bei unterschiedlichsten atmosphärischen Wasserdampfkonzentrationen bekannt. Dabei können die zu detektierenden Substanzen z.B. bedeckt durch eine oder mehrere Lagen unbekannter Stoffmaterialien sein, wobei die Atmosphäre im Strahlengang zwischen Strahlungsquelle, Messobjekt und Detektor eine variierende Luftfeuchtigkeit und Temperatur aufweisen und auch die Länge des Strahlengangs unterschiedlich ausfallen kann. Solche erschwerte Randbedingungen treten z.B. im Bereich der Sicherheitskontrolle auf, wo Personen gefährliche Stoffe unterhalb eines Kleidungsstückes am Körper tragen können. Als weiteres Szenario kann eine unerlaubte Substanz im Gepäck zwischen Kleidungsstücken versteckt worden sein.

Aufgabe der Erfindung ist es, ein Verfahren zur automatisierten Charakterisierung und Klassifizierung von festen oder flüssigen Substanzen mit Hilfe der THz-Spektroskopie unter erschwerten Randbedingungen bei unterschiedlichsten atmosphärischen Wasserdampfkonzentrationen zur Verfügung zu stellen.

Diese Aufgabe wird bei einem Verfahren der eingangs bezeichneten Art erfindungsgemäß durch die in Anspruch 1 spezifizierten Merkmale gelöst. Vor der Auswertung des jeweiligen Reflexionsspektrums wird das jeweils detektierte Rohspektrum einer Vorbehandlung unterzöger, wobei in einem ersten Vorbehandlungsschritt der Einfluss der Wasserbanden im jeweiligen Rohspektrum durch Spike-Filter eliminiert wird, in einem zweiten Vorbehandlungsschritt das jeweilige Rohspektrum einer Basislinienkorrektur unterzogen wird und in einem dritten Vorbehandlungsschritt hochfrequente Anteile des Rohspektrums durch Glättung eliminiert werden.

Auf diese Weise ist es möglich, nicht benötigte Informationen, die im Rohspektrum enthalten sind, zu entfernen und möglichst nur die Informationen zu erhalten, die auf den (chemischen) Eigenschaften der gemessenen Proben beruhen. Dabei wird berücksichtigt, dass die Stoffmaterialien der Kleidungsstücke sehr stark die Strahlungsintensitäten vermindern, die zur Messung der zu untersuchenden Probe genutzt werden, so dass die am Detektor ankommenden Signalintensitäten sehr gering sein können und die Reflexionsspektren somit ein sehr ungünstiges Signal-Rauschverhältnis aufweisen. Zusätzliche Störsignale können von überlagerten Spektren aus den Reflexionsanteilen von unbekannten Stoffmaterialien mit einer Zusammensetzung von Produkten, wie Baumwolle, Viskose, Leder und vieles mehr stammen. Auch die physikalische Beschaffenheit der Oberfläche (Texturoberfläche, z.B. gewebt, glatt, u.s.w.) kann die spektrale Charakterisierung der eigentlichen Substanzen stark erschweren oder unmöglich machen. Ein weiterer, nicht zu unterschätzender Einfluss stellt die relative Umgebungsfeuchte dar. Die störenden, durch Absorption zustandekommenden atmosphärischen Wasserbanden können im Frequenzraum so hoch sein, dass die Qualität der Reflexionsspektren ebenfalls schlechter wird und teilweise ganze Frequenzbereiche unbrauchbar werden (durch sogenanntes line-clipping). Ferner sind die Reflexionsspektren der Feststoffe auch von der Körnigkeit des jeweiligen Feststoffes abhängig und auch der Winkel der eintreffenden Strahlung ist von Einfluss.

In vorteilhafter Ausgestaltung ist vorgesehen, dass das jeweilige detektierte Rohsignal vor der Vorbehandlung in den Frequenzbereich transformiert wird. Dies ist natürlich nur erforderlich bei der Verwendung von Spektrometern, die den Zeitbereich messen (z.B. bei der THz-TDS). Dann müssen die Interferogramme bzw. Wellenformen zunächst in den Frequenzbereich transformiert werden, was vorzugsweise mit Hilfe einer Fourier-Transformation durchgeführt werden kann, welche die Rohspektren liefert.

Um in einer Vorstufe störende und nicht benötigte spektrale Informationen, z.B. bedingt durch die THz-Spektrometer-Charakteristik und durch den Luftfeuchtigkeitseinfluss, weitestgehend zu eliminieren, ist ferner bevorzugt vorgesehen, dass das jeweilige Rohspektrum vor der Vorbehandlung durch ein Referenzspektrum des verwendeten Spektrometers dividiert wird.

Um die Basislinienkorrektur bei der Vorbehandlung durchzuführen, ist bevorzugt vorgesehen, dass für die Basislinienkorrektur des jeweiligen Rohspektrums ein Tiefpassfilter verwendet oder das jeweilige Rohspektrum durch das mit gleitendem Mittelwert erhaltene Spektrum dividiert oder von dem jeweiligen Rohspektrum die gleichbehandelte Funktion subtrahiert wird.

Des Weiteren kann vorgesehen sein, dass das jeweilige vorbehandelte Spektrum mit Hilfe einer Kramers-Kronig-Transformation transformiert wird. Der Vorteil dieser Transformation liegt darin, dass die spektralen Informationen in den Reflexionsspektren in Absorptions-Banden umgerechnet werden. Es kommt im idealen Fall zu einer größeren Informationsdichte in den Spektren. In den Reflexionsspektren vorhandene Dispersionssignaturen lassen sich in schmalere Absorptionsbanden umrechnen.

Die Spektren bestehen auch nach der Vorbehandlung noch aus mehreren 100 Wertepaaren von Frequenz- und Reflexionsgrad. Für die Klassifizierung ist zum einen ein so hoch dimensionaler Raum nicht notwendig und zum anderen verlangsamt die Datenmenge die Analyse. Es ist deshalb bevorzugt weiterhin vorgesehen, dass mit dem jeweiligen vorbehandelten Spektrum eine Eigenschaftsreduktion z.B. durch Hauptkomponentenanalyse in einen niedrig dimensionalen Raum durchgeführt wird. Die Darstellung der ursprünglichen Daten in den transformierten Raum, der durch die ersten Hauptkomponentenvektoren aufgespannt wird, zeigt oft schon eine sichtbare Trennung der Daten. Der eigentliche Klassifikator definiert (geometrische) Bereiche in einem meist niederdimensionalen Raum, der Substanzen verschiedener Klassen zuzuordnen ist. Dabei werden vorzugsweise zur Klassifikation QDC-Klassifikatoren (quadratic discriminant classifier) verwendet. Es können auch Parzen- oder Gauss mixture model-Klassifikatoren verwendet werden.

Das erfindungsgemäße Verfahren ist insbesondere zur Verwendung bei der Überwachung und Gefahrenabwehr an Flughäfen, Bahnhöfen, Behörden, militärischen Bereichen, bei Großveranstaltungen oder dgl. geeignet.

Es kann zur Detektion bzw. Identifikation von Stoffen bzw. Materialien, insbesondere von Gefahrstoffen, wie Sprengstoffen oder Drogen, verwendet werden. Außerdem können grundsätzlich Materialien, die sich hinter bzw. in anderen Materialien befinden, auf diese Weise detektiert, erkannt bzw. identifiziert werden.

Ferner kann das Verfahren zur Personenkontrolle, Gepäckstückkontrolle, Poststück- oder Verpackungskontrolle verwendet werden.

Die Erfindung ist nachstehend anhand der Zeichnung beispielhaft näher erläutert. Diese zeigt in

Fig. 1          ein Ablaufschema einer bevorzugten Ausführungsform des erfindungsgemäßen Verfahrens,

Fig. 2a         ein Amplitudenrohspektrum einer Referenzmessung mit und ohne Luftfeuchte,

Fig. 2b         ein Amplitudenrohspektrum einer Probenmessung mit und ohne Luftfeuchte,

Fig. 3a         ein Reflexionsspektrum einer Probe ohne Stoffmaterialien,

Fig. 3b         ein Reflexionsspektrum einer Probe mit überdecktem Stoffmaterial,

Fig. 4a         das Spektrum gemäß Fig. 3a nach Elimination der Wasserbanden bedingten Spikes und Festlegung des spektralen Bereiches,

Fig. 4b         das zugehörige Spektrum zu demjenigen nach Fig. 3b für Reinstoffe mit Kleidung nach entsprechender Vorbehandlung,

Fig. 5a und 5b  die Normierung der Spektren gemäß Fig. 4a und 4b,

Fig. 6a und 6b  das Ergebnis der Eliminierung hochfrequenter Rauschanteile durch Glättung bei den Spektren nach Fig. 5a und 5b,

Fig. 7          die Optimierung des Parameters für die Basislinienkorrektur,

Fig. 8          die Optimierung des Parameters für die Spektrenglättung und in

Fig. 9          die Auswahl der optimalen Anzahl von Hauptkomponenten.

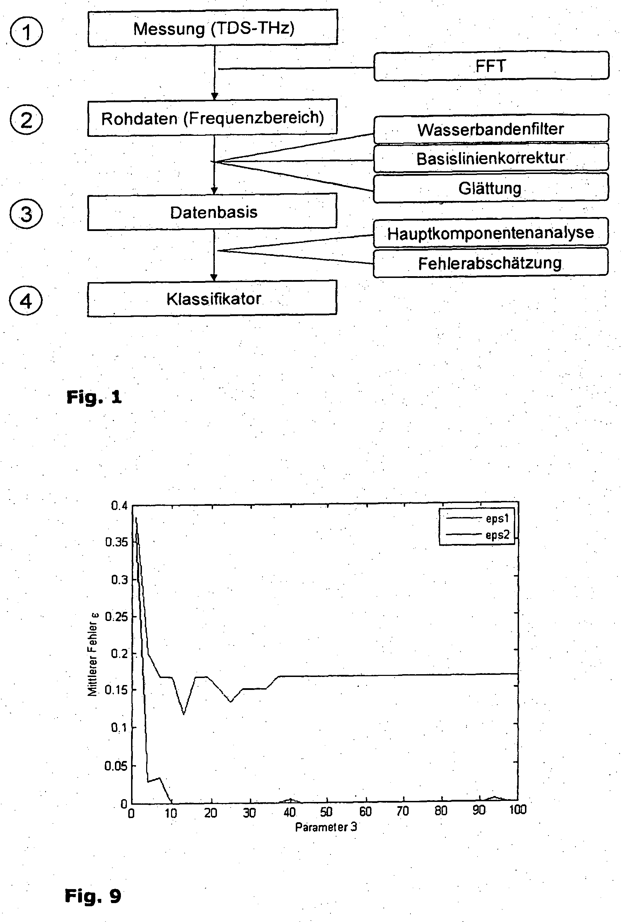

In Fig. 1 ist der prinzipielle Ablauf einer bevorzugten Ausführungsform des erfindungsgemäßen Verfahrens von der Aufnahme eines Rohspektrums über die Vorbehandlung der Spektren bis hin zur Klassifizierung der Substanzen dargestellt.

Das Ziel der Spektrenvorbehandlung ist es, alle nicht benötigten Informationen im Spektrum zu entfernen und möglichst nur die Informationen zu enthalten, die auf den (chemischen) Eigenschaften der gemessenen Probe beruhen.

Bei Spektrometern, die im Zeitbereich messen, wie bei der THz-TDS, müssen Interferogramme bzw. Wellenformen zunächst in den Frequenzraum transformiert werden. Dies wird üblicherweise mit Hilfe einer Fourier-Transformation durchgeführt.

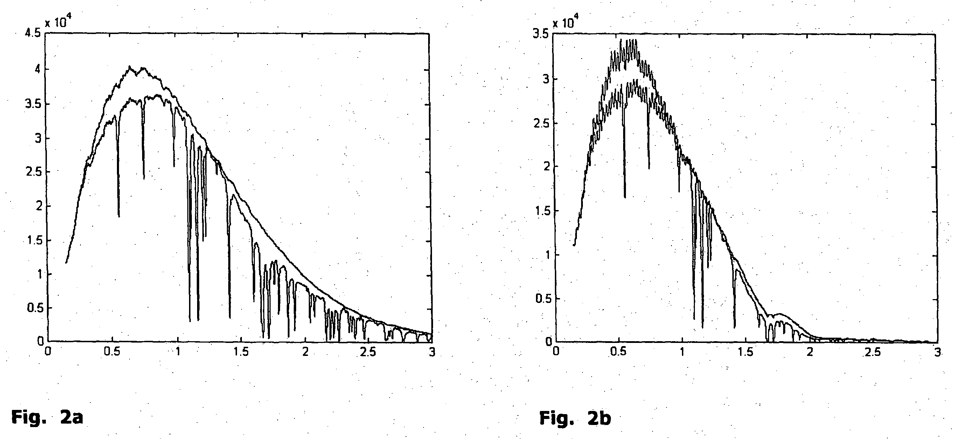

In Fig. 2a ist der qualitative Verlauf zweier Referenzspektren (ohne Probe) mit und ohne Luftfeuchte dargestellt. Demgegenüber sind in Fig. 2b zwei Spektren von einer Testsubstanz aufgetragen, wiederum gemessen bei vorhandener Luftfeuchtigkeit und bei trockener Atmosphäre. Die relativ breiten grau unterlegten Wasserbanden sind sowohl in der Referenzmessung als auch bei der Messung der Probe zu sehen.

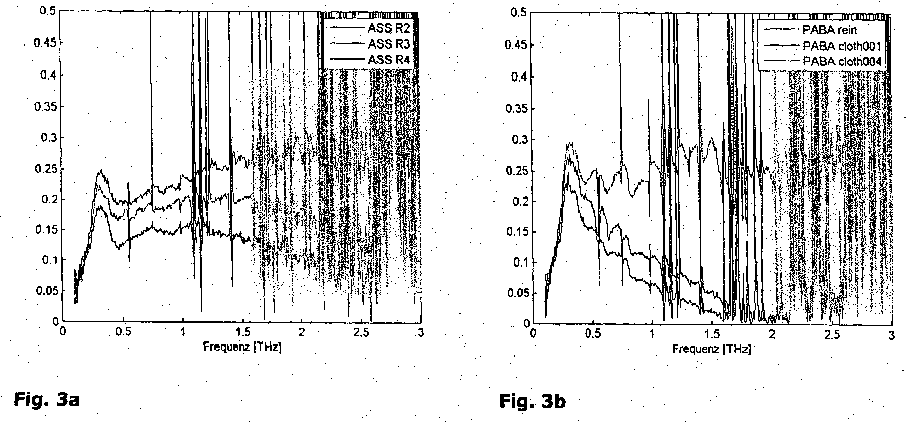

Durch Division des Probenspektrums durch ein Referenzspektrum werden die störenden und nicht benötigten spektralen Informationen - bedingt durch die THz-Spektrometercharakteristik und durch den Einfluss der Luftfeuchtigkeitmathematisch weitestgehend eliminiert. Durch Messungenauigkeiten und variierende Umweltbedingungen (sich ändernde Luftfeuchtigkeit) werden die atmosphärischen Wasserbanden insbesondere zu höheren Frequenzen hin immer schlechter kompensiert und herausgefiltert. In den Fig. 3a und 3b sind in allen Spektren die durch Spektrenquotientenbildung entstandenen und störenden Spitzen ("Spikes") zu sehen. Aufgetragen sind drei Spektren der unbedeckten Teststubstanz ASS (Acetylsalicylsäure). Die Reproduzierbarkeit der Spektren der untersuchten Substanz ist aufgrund des schlechten Signal-Rauschverhältnisses, des stark variierenden spektralen Untergrundes und der sehr scharfen Spikes äußerst schlecht. Noch größere Schwierigkeiten bereiten Messungen von Substanzen, die durch unterschiedliche Stoffe bedeckt sind. Der spektrale Untergrund variiert hier noch stärker als bei den Rein-Substanzen, da die Stoffe frequenzabhängig unterschiedlich stark absorbieren (Fig. 3b für die Testsubstanz PABA (engl. Abkürzung für p-Aminobenzoic Acid, übersetzt p-Aminobenzoesäure). Weiterhin können die durchleuchteten Stoffe auch zu zusätzlichen Banden im Spektrum führen, die eine Charakterisierung und Klassifizierung der untersuchten Substanz weiter erschweren.

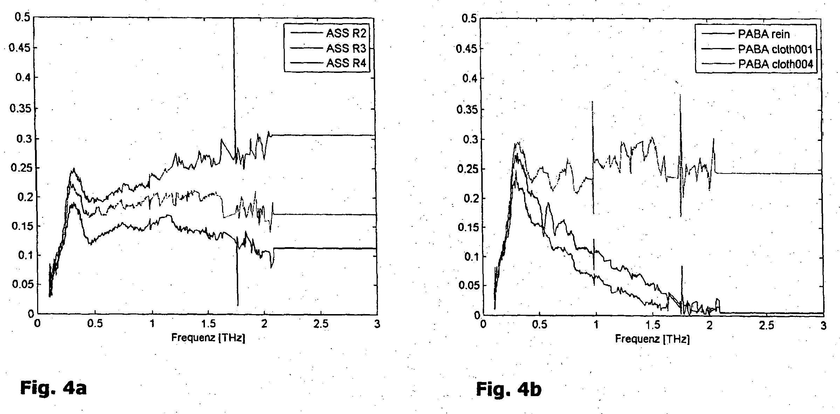

Die Elimination der wasserbandenbedingten Spikes erfolgt nur im Bereich bis 2,1 THz gut und das auch nur dann, wenn das Referenzspektrum bei gleichen Luftfeuchten aufgenommen wurde. Die spektralen Informationen oberhalb von 2,1 THz können vernachlässigt werden oder werden konstant extrapoliert. In den Fig. 4a und 4b ist das Resultat der beiden Vorbehandlungsmaßnahmen für Spektren von Reinstoffen (Fig. 4a) und von Reinstoffen mit Kleidung (Fig. 4b) dargestellt.

Die Spikes können als mathematisches Kriterium definiert werden. An einem Spike haben zwei aufeinanderfolgende Punkte eine deutlich höhere Steigung als die durchschnittliche Änderung aufeinander folgender Punkte. Ein Vektor y enthalte beispielsweise ein Spektrum. Wenn

$$| y(i+1)-y(i) | / delta > threshold \qquad (SPIKE\ 1)$$

erfüllt ist, dann ist bei (i+1) ein Spike vorhanden. Der Wert "threshold" ist problemspezifisch zu wählen, ist aber üblicherweise bei ein und derselben Mess-Anlage immer gleich. Das "delta" kann, muss aber nicht konstant sein. Insbesondere bei homogener Verteilung auf der Abszisse kann mit einem konstanten "delta" gearbeitet werden. Das Kriterium (SPIKE 1) wird über alle Punkte hinweg angewendet. Ein alternativer pragmatischer Zugang besteht darin, alle Steigungen in einen Vektor zu speichern und anschließend der Größe nach zu sortieren. Als Fachmann erkennt man, welcher Anteil des Spektrums durch Spikes unbrauchbar ist. Wenn dieser Anteil ermittelt wurde, können anschließend einfach z.B. die 30 % größten Steigungen eliminiert werden.

Ziel ist es, den Prozentsatz so zu wählen, dass möglichst alle Spikes verschwinden, aber nicht unnötig viele Stellen, an denen keine Spikes sind, eliminiert werden. Mit Elimination ist bei Spike-Filtern gemeint, dass die Punkte an denen Spikes liegen, einfach unberücksichtigt bleiben. Es werden keine neuen Werte interpoliert. Weitere Methoden sind in Phillips, G. R.; Harris, J. M. Anal. Chem. 1990, 62, 2351-2357 und Hill, W. and Rogalla, D.: Spike-correction of weak signals from charge-coupled devices and its application to Raman spectroscopy Anal. Chem., 1992, 64 (21), pp 2575-2579 beschrieben, bei denen die Spikestellen aufgefüllt werden. Wenn die Stellen, an denen Spikes entstehen, in allen Spektren immer die gleichen sind, kann man auch mit Listen arbeiten.

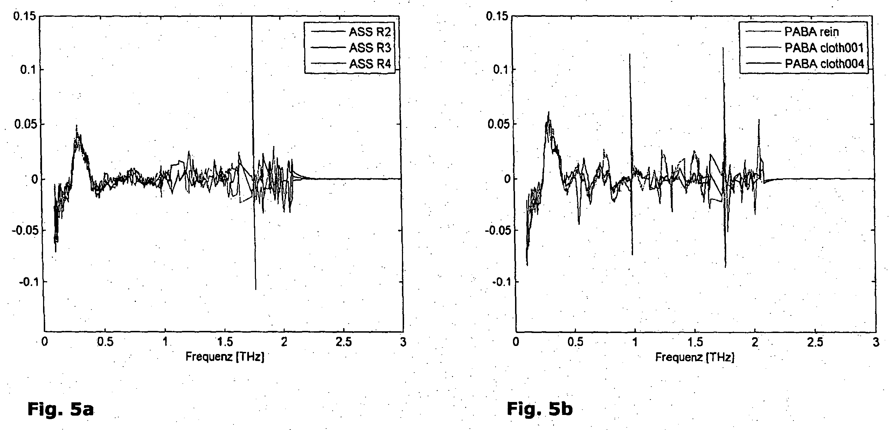

Die (gesuchte) spektrale Information (Fig. 4a, 4b) liegt in einem mittelfrequenten Bereich. Die Variation der Basislinien kann als niederfrequente Störung interpretiert werden, während die hochfrequenten Störungen in dem Spektrum sich als schlechtes Signal-Rauschverhältnis niederschlägt. Um die Spektren miteinander vergleichbar zu machen, ohne die gesuchte spektrale Substanzinformation zu löschen, wird zunächst der Verlauf der Basislinie durch einen Tiefpassfilter bestimmt. Die Korrektur erfolgt, indem die Basislinie von dem Ausgangsspektrum subtrahiert wird oder das Ausgangsspektrum durch die Basislinie dividiert wird. Beide Vorgehensweisen normieren die vorliegenden Spektren. Die Fig. 5a und 5b zeigen die hohe Qualität der Reproduzierbarkeit gleicher Substanzen, ohne (Fig. 5a) und mit (Fig. 5b) Stoffmaterialien bei Verwendung des speziell angepassten Tiefpassfilters.

Grundsätzlich gibt es verschiedene Methoden der Basislinienkorrektur. Im einfachsten Fall werden die Spektren durch Addition oder Subtraktion von Basislinien in den positiven Bereich transformiert. Alternativ können alle Spektren auch so bearbeitet werden, dass die Spektren mit ihren lokalen Minima jeweils in die Abszisse geschoben werden, d.h. diese stellen entsprechende Nullwerte dar. Viele Programme bieten auch die Möglichkeit, mehrere Punkte auf dem Spektrum zu wählen, die dann durch einen stückweise linearen oder gleitenden Verlauf (z.B. durch Spline-Funktionen) beschrieben werden und die Basislinie repräsentieren. Die gewählten Punkte sind dabei meist die lokalen Minima der Spektren. Die Methode ist jedoch mit zuviel Handarbeit verbunden und erschwert eine Automatisierung. Leistungsfähigere Ansätze verwenden z.B. einen Tiefpassfilter, um den Trend des Spektrums zu berechnen. Dieser Trend ist die Basislinie. Zur Bestimmung des Trends eignen sich wieder die Methode des gleitenden Mittelwertes, die Regression einer polynomialen Funktion über das Spektrum oder auch die lokale Regression nach Savitzky-Golay (Savitzky A. Golay, M.J.E., Smoothing and Differentiation of Data by Simplified Least Squares Procedures, Analytical Chemistry, Volume 36, 1627-1639, (1964). Als letzter Schritt der Spektren-Vorbehandlung wird noch eine Glättung der Spektren durchgeführt, welche die hochfrequenten und störenden Rauschanteile eliminiert.

Die mathematisch einfachste Methode der Glättung ist die Anwendung des gleitenden Mittelwertes (moving average). Dies führt schon oft zu sehr guten Ergebnissen. Der gleitende Mittelwert kann als eine Art Tiefpassfilter angesehen werden. Die weiteren Methoden der Regression basieren auf einer lokalen Regression der Daten. Diese kann auf Ansatzfunktionen erster Ordnung (lowess) Cleveland, W.S. Lowess: a program for smoothing scatterplots by robust locally weighted regression, American Statistician, Volume 35, Issue 1, 54, (1981) oder zweiter Ordnung basieren (loess). Abgeleitet von diesen beiden Methoden stehen auch noch Varianten zur Verfügung, welche Ausreißer der Datenreihe mit einem geringeren Gewicht versehen und damit robuster sind (rlowess, rloess). Eine weiter verallgemeinerte Variante ist die nach Savitzky-Golay. (sgolay), welche ebenfalls auf lokaler Regression mit meist quadratischer Ansatzfunktion basiert (Orfanidis, S.J., Introduction to Signal Processing, Prentice-Hall, Englewood Cliffs, NJ, (1996), ISBN und Savitzky, A. Golay, M.J.E., Smoothing and Differentiation of Data by Simplified Least Squares Procedures, Analytical Chemistry, Volume 36, 1627-1639, (1964)). Eine vorteilhafte Eigenschaft dieser Methode ist, dass die lokalen Extremwerte besser erhalten bleiben. Neue Glättungs-Methoden in der Filtertechnik arbeiten nach der wavelet-Methode (Donoho, D.L., Johnstone, I.M., Kerkyacharian, G., Picard, D., Wavelet shrinkage: asymptopia, Jour.Roy. Stat.Soc., Series B, Volume 57, Issue 2, 301-369, (1995); DeVore, R.A., Jawerth, B., Lucier, B.J., Image kompression through wavelet transform coding, IEEE Trans. on Inf. Theory, Volume 38, Issue 2, 719-746, (1992) und Donoho, D.L., Johnstone, I.M., Ideal spatial adaptation by wavelet shrinkage, Biometrika, Volume 81, 425-455, (1994). Diese Methode wurde ursprünglich zur Signalkompression verwendet. Die hierarchische Darstellung des Ausgangssignals auf verschiedenen Skalen lässt sich aber auch zur Glättung verwenden. Vorteilhaft an den wavelet-Methoden ist eine weitestgehende Freiheit von Parametern, wodurch die Methode an Allgemeingültigkeit gewinnt. Allerdings ist die Wahl der Ansatzfunktion für das wavelet-Verfahren von großer Bedeutung.

Die so bearbeiteten Spektren können direkt der Klassifizierung zugeleitet werden. Alternativ besteht die Möglichkeit, die Reflexionsspektren mit Hilfe der Kramers-Kronig-Transformation (KKT) zur transformieren. Der Vorteil liegt darin, dass die spektralen Informationen in den Reflexionsspektren in Absorptions-Features umgerechnet werden. Es kommt im idealen Fall zu einer größeren Informationsdichte in den Spektren. In den Reflexionsspektren vorhandene Dispersion-Features lassen sich in schmalere Absorptionsbanden umrechnen.

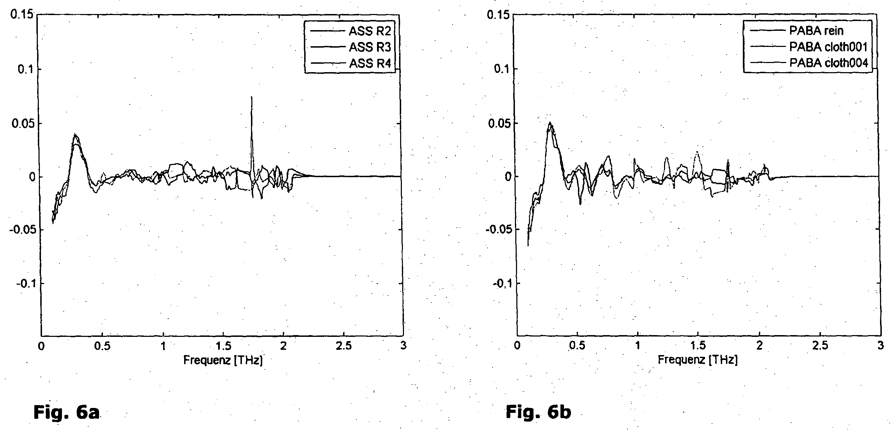

Die Fig. 6a und 6b zeigen das Ergebnis der Glättung im Anschluss an die Spektren gemäß Fig. 5a bzw. 5b.

Die Spektren bestehen auch nach der Vorbehandlung noch aus mehreren hundert Wertepaaren von Frequenz und Reflexionsgrad. Für die Klassifizierung ist zum einen ein so hochdimensionaler Raum nicht notwendig und zum anderen verlangsamt die Datenmenge die Analyse. Daher erfolgt eine weitere Dimensionsreduzierung oder auch Eigenschaftsreduktion bzw. Eigenschaftsauswahl (engl. Feature reduction, feature selection). Die Eigenschaftsreduktion erfolgt mit Hilfe der Hauptkomponentenanalyse (engl. PCA: principal component analysis). Die Darstellung der ursprünglichen Daten in dem transformierten Raum, der durch die ersten Hauptkomponentenvektoren aufgespannt wird, zeigt oft schon eine sichtbare Trennung der Daten. Eine andere Alternative zur Dimensionsreduzierung stellt das sogenannte Fisher Mapping (oder Lineare Diskriminanzanalyse LDA) dar (siehe z.B. de Ridder, D.; Loog, M.; Reinders, M.J.T.: Local Fisher embedding, Proceedings of the 17th International Conference on Pattern Recognition, 2004. (Vol.2) pp. 295 - 298 (2004)). Der eigentliche Klassifikator definiert (geometrische) Bereiche in einem meist niederdimensionalen Raum, der Substanzen verschiedener Klassen zuzuordnen ist. Oft verwendete Klassifikatoren sind LDC (linear discriminant classifier), QDC (quadratic discriminant classifier) oder Parzen, die alle auf Abständen bzw. Aufenthaltswahrscheinlichkeiten der Datenpunkte basieren. Beim Testen durchläuft eine Messung (Spektrum) die gleichen Schritte der Spektren-Vorbehandlung und Eigenschaftsreduktion. Anhand der Position bzw. eines Abstandsmaßes entscheidet der Klassifikator, welcher Substanz die Testmessung zuzuordnen ist. Dies geschieht beispielsweise anhand des geringsten Abstandes zur nächsten (bekannten) Probe.

Die Bearbeitungsschritte der Spektren-Vorbehandlung sind nicht parameterfrei. Nachfolgend wird beschrieben, wie optimale Parameter der einzelnen Bearbeitungsschritte bestimmt werden können. Das Vorgehen wird anhand von sieben Messreihen à 10 Messungen mit bekannten Labels beschrieben. Bekannte Labels bedeutet in diesem Zusammenhang, dass die Zuordnung Spektren / Substanz bekannt ist.

Die Güte der Vorhersage wurde anhand von zwei Fehlerindikatoren getestet.

Bei Test 1 (eps1) wurden sechs der sieben Messreihen zum Klassifizieren verwendet. Die Hälfte der Spektren werden zum Aufbau des Klassifikators (z.B. durch Hauptkomponentenanalyse und Parzen verwendet und die andere Hälfte zum Testen. Der Wert eps1 gibt an, welcher prozentuale Anteil der zum Testen verwendeten Spektren falsch positiv oder falsch negativ zugeordnet wird.

Der Test 2 (eps2) nimmt zum Testen Spektren einer neuen Messreihe, die überhaupt nicht zum Trainieren verwendet wurden. Auch hier gibt der Wert von eps2 an, welcher prozentuale Anteil der zum Testen verwendeten Spektren falsch positiv oder falsch negativ zugeordnet wird.

Der Vorteil dieser Vorgehensweise liegt darin, dass die Streuung der Messungen innerhalb einer Messreihe und Streuung zwischen den Messreihen (andere Messperson, andere Umweltbedingungen) unabhängiger voneinander untersucht werden können. Schaut man sich nur die Werte von eps1 an, so besteht die Gefahr des over-fitting des Klassifikators. Der Wert von eps1 ist ein scheinbarer Fehler, während eps2 eine realistische Fehlerabschätzung erlaubt.

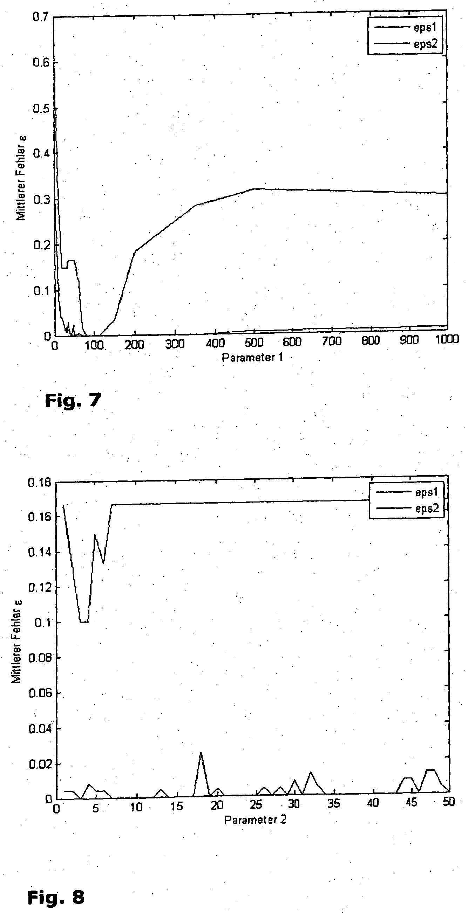

Die Fig. 7 zeigt die Vorhersagegüte des Klassifikators in Abhängigkeit von den Parametern für die Basislinienkorrektur. Gute Ergebnisse werden für Parameter 1 von 50 bis 150 erzielt, was der Elimination von Tiefenfrequenzen entspricht (vgl. Vorbehandlungsschritt von Fig. 3a, 3b nach Fig. 4a, 4b). Das over-fitting wird deutlich sichtbar für größer werdende Parameter. Der scheinbare Fehler eps1 bleibt klein, während die Werte von eps2 anwachsen.

Der zweite Parameter verändert die Glättung der Spektren (siehe Fig. 6a, 6b). Die Fig. 8 zeigt anhand des Verlaufs von eps1 und eps2, dass überhaupt keine und zu viel Glättung die Fehlerrate erhöht. Gute Ergebnisse werden für Parameter 2 von 2 bis 5 erzielt, was einer moderaten Glättung entspricht.

Als letzter wichtiger Parameter wurde untersucht, welchen Einfluss die Eigenschaftsreduktion auf die Vorhersagegüte hat (Parameter 3, Anzahl der verwendeten Hauptkomponenten nach der PCA). Prinzipiell können auch die höheren Hauptkomponenten zur Klassifizierung herangezogen werden. Es besteht jedoch gerade hier die Gefahr eines over-fitting, da die höheren Komponenten nicht unbedingt substanzspezifische Informationen enthalten. Die Fig. 9 zeigt, dass der (scheinbare) Fehler eps1 für eine immer größer werdende Anzahl an verwendeten Hauptkomponenten gegen 0 geht. Der tatsächliche Fehler eps2 zeigt jedoch einen Bereich, wo er minimal wird. Gute Ergebnisse werden für Parameter 3 um 10 erzielt. In dem vorliegenden Fall haben die ersten zehn Hauptkomponenten ca. 90 % der gesamten spektralen Varianz abgedeckt.

Die vorgenannten optimalen Parameterwerte sind nicht allgemein gültig. Sie sind vielmehr abhängig von der Messanlage der Anzahl an betrachteten Klassen und Spektren pro Klasse und von dem Verfahren zur Glättung und Basislinienkorrektur selbst. Der Grundgedanke bei der Vorgehensweise bei der Klassifikatorauswahl ist jedoch allgemein gültig.

Grundsätzlich eignet sich das Verfahren nicht nur zur Analyse von Reflexion-, sondern auch von Transmissionsspektren.

**Patentansprüche**

1. Verfahren zur Bestimmung von chemischen Bestandteilen von festen oder flüssigen Substanzen mit Hilfe der THz-Spektroskopie bei unterschiedlichen atmosphärischen Wasserdampfkonzentrationen, bei welchem die Substanzen durch die THz-Strahlung in Schwingungen versetzt und zumindest die reflektierten Strahlungsanteile detektiert werden und das jeweilige Reflexionsspektrum ausgewertet wird, wobei zunächst das jeweils detektierte Rohspektrum durch ein Referenzspektrum ohne Probe dividiert wird und anschließend die durch Luftfeuchtigkeit im Strahlenganz zwischen THz-Strahlungsquelle, Messobjekt und Detektor durch Absorption verursachten atmosphärischen Wasserbanden eliminiert werden,
   **dadurch gekennzeichnet,**
   **dass** nach der Division durch das Referenzspektrum ohne Probe in einem ersten Vorbehandlungsschritt die durch Wasserbanden bedingten Spitzen im jeweiligen Rohspektrum durch Spike-Filter eliminiert werden, in einem zweiten Vorbehandlungsschritt das jeweilige Rohspektrum einer Basislinienkorrektur unterzogen wird und in einem dritten Vorbehandlungsschritt hochfrequente Anteile des Rohspektrums durch Glättung eliminiert werden und anschließend das so vorbehandelte Spektrum zur Auswertung einer Klassifzierung zugeleitet wird.

2. Verfahren nach Anspruch 1,
   **dadurch gekennzeichnet,**
   **dass** das jeweilige detektierte Rohspektrum vor der Vorbehandlung in den Frequenzbereich transformiert wird.

3. Verfahren nach einem oder mehreren der Ansprüche 1 oder 2,
   **dadurch gekennzeichnet,**
   **dass** für die Basislinienkorrektur des jeweiligen Rohspektrums ein Tiefpassfilter verwendet oder das jeweilige Rohspektrum durch das mit gleitendem Mittelwert erhaltene Spektrum dividiert oder von dem jeweiligen Rohspektrum das vorgenannte Spektrum subtrahiert wird.

4. Verfahren nach einem oder mehreren der Ansprüche 1 bis 3,
   **dadurch gekennzeichnet,**
   **dass** das jeweilige vorbehandelte Spektrum mit Hilfe einer Kramers-Kronig-Transformation transformiert wird.

5. Verfahren nach einem oder mehreren der Ansprüche 1 bis 4,
   **dadurch gekennzeichnet,**
   **dass** mit dem jeweiligen vorbehandelten Spektrum eine Eigenschaftsreduktion. durch Hauptkomponentenanalyse in einen niedriger dimensionalen Raum durchgeführt wird.

6. Verfahren nach einem oder mehreren der Ansprüche 1 bis 5,
   **dadurch gekennzeichnet,**
   **dass** das jeweilige vorbehandelte Spektrum durch QDC-Klassifikatoren klassifiziert wird.

7. Verfahren nach einem oder mehreren der Ansprüche 1 bis 6,
   **dadurch gekennzeichnet,**
   **dass** es zur Überwachung und Gefahrenabwehr an Flughäfen, Bahnhöfen, Behörden, militärischen Bereichen öder bei Großveranstaltungen verwendet wird.

## Claims

1. Method for determining the chemical components of solid or liquid substances by means of THz-spectroscopy at different atmospheric water vapour concentrations, in which the substances are set to vibrate by the THz-radiation and at least the reflected radiation portions are detected and the respective reflection spectrum is evaluated, wherein firstly the respectively detected raw spectrum is divided by a reference spectrum without sample and afterwards the atmospheric water bands caused by absorption by humidity in the beam between the THz radiation source, measurement object and detector are eliminated, **characterised in that** after the division by the reference spectrum without sample in a first pre-treatment step the peaks determined by water bands in the respective raw spectrum are eliminated by spike filters, in a second pre-treatment step the respective raw spectrum is subjected to a base line correction and in a third pre-treatment step high-frequency portions of the raw spectrum are eliminated by smoothing and afterwards the thus pretreated spectrum is assigned to a classification for evaluation.

2. Method according to claim 1, **characterised in that** the respective detected raw spectrum is transformed into the frequency range prior to the pre-treatment

3. Method according to one or more of claims 1 or 2, **characterised in that** for the base line correction of the respective raw spectrum a low-pass filter is used or the respective raw spectrum is divided by the spectrum obtained by sliding average or the aforementioned spectrum is subtracted from the respective raw spectrum.

4. Method according to one or more of claims 1 to 3, **characterised in that** the respective pretreated spectrum is transformed by means of a Kramers-Kronig transformation.

5. Method according to one or more of claims 1 to 4, **characterised in that** by means of the respective pretreated spectrum a property reduction is performed by analysis of the main components in a low dimensional space.

6. Method according to one or more of claims 1 to 5, **characterised in that** the respective pretreated spectrum is classified by QDC classifiers.

7. Method according to one or more of claims 1 to 6, **characterised in that** it is used for surveillance and emergency response at airports, railways stations, public authorities, military zones or major events.

## Revendications

1. Procédé de détermination des composants chimiques de substances solides ou liquides par spectroscopie THz dans différentes concentrations atmosphériques de vapeur d'eau, dans lequel les substances sont amenées à vibrer par le rayonnement THz et au moins les fractions de rayonnement réfléchies sont détectées et le spectre de réflexion respectif est exploité, dans lequel, tout d'abord, le spectre brut respectivement détecté est divisé par un spectre de référence sans échantillon et, ensuite, les bandes d'eau atmosphériques occasionnées par l'humidité de l'air dans le trajet des rayons entre la source de rayonnement THz, l'objet de mesure et le détecteur par absorption sont éliminées,

**caractérisé en ce que**,

après la division par le spectre de référence sans échantillon dans une première étape de prétraitement, les pointes dues aux bandes d'eau dans le spectre brut respectif sont éliminées par des filtres de Spike, dans une deuxième étape de prétraitement, le spectre brut respectif est soumis à une correction des lignes de base et, dans une troisième étape de prétraitement, les fractions de hautes fréquences du spectre brut sont éliminées par lissage et, ensuite, le spectre ainsi prétraité est acheminé pour évaluer une classification.

2. Procédé selon la revendication 1,
   **caractérisé en ce que** :

   le spectre brut respectivement détecté est transformé avant le prétraitement dans la plage de fréquences.

3. Procédé selon une ou plusieurs des revendications 1 ou 2,
   **caractérisé en ce que**,
   pour la correction de la ligne de base du spectre brut respectif, on utilise un filtre passe-bas ou le spectre brut respectif est divisé par le spectre obtenu avec une valeur moyenne mobile ou le spectre précité est soustrait du spectre brut respectif.

4. Procédé selon une ou plusieurs des revendications 1 à 3,
   **caractérisé en ce que** :

   le spectre prétraité respectif est transformé à l'aide d'une transformation de Kramers-Kronig.

5. Procédé selon une ou plusieurs des revendications 1 à 4,
   **caractérisé en ce que**,
   avec le spectre prétraité respectif, on effectue une réduction de propriété par analyse des composants principaux dans un petit espace dimensionnel.

6. Procédé selon une ou plusieurs des revendications 1 à 5,
   **caractérisé en ce que** :

   le spectre prétraité respectif est classifié par des classificateurs QDC.

7. Procédé selon une ou plusieurs des revendications 1 à 6,
   **caractérisé en ce que** :

   il est utilisé pour le contrôle et la protection contre les risques dans les aéroports, les gares, les services publics, les zones militaires ou les grandes manifestations.

**Fig. 1**

**Fig. 9**

**Fig. 2a**

**Fig. 2b**

EP 2 635 882 B1

Fig. 3a

Fig. 3b

**Fig. 4a**

**Fig. 4b**

Fig. 5b

Fig. 5a

**Fig. 6a**

**Fig. 6b**

**Fig. 7**

**Fig. 8**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070114419 A1
- US 20090101843 A1

**In der Beschreibung aufgeführte Nicht-Patentliteratur**

- The renaissance of far infrared spectroscopy, Journal of Molecular Structure. **HENRY M. MANTSCH ; DIETER NAUMANN.** Terahertz Spectroscopy: Principles and Applications. CRS Press, 2010, vol. 964, 1-4
- Terahertz Spectroscopy: Principles and Applications. CRS Press, 2007
- **M. ORTOLANI ; J.S. LEE ; U. SCHADE ; H.-W. HÜBERS.** Surface roughness effects on the terahertz reflectance of pure explosive materials. *Appl. Phys. Lett.,* 2008, vol. 93, 081906
- **Y.C. SHEN ; T. LO ; P.F. TADAY ; B.E. COLE ; W.R. TRIBE ; M.C. KEMP.** Detection and identification of explosives using terahertz pulsed spectroscopic imaging. *Appl. Phys. Lett.,* 2005, vol. 86, 241116
- **C.D. BROWN.** Discordance between Net Analyte Signal Theory and Practical Multivariate Calibration. *Anal. Chem.,* 2004, vol. 76, 4364-4373
- Near-infrared reflection spectroscopy for non-invasive monitoring of glucose - established and novel strategies for multivariate calibration. **H.H. HEISE ; P. LAMPEN ; R. MARBACH.** Handbook of Optical Sensing of Glucose in Biological fluids and Tissues. CRS Press, 2008
- **BAKER et al.** *Proc. SPiE,* 2005, vol. 5790, 1-10
- **PHILLIPS, G. R. ; HARRIS, J. M.** *Anal. Chem.,* 1990, vol. 62, 2351-2357
- **HILL, W. ; ROGALLA, D.** Spike-correction of weak signals from charge-coupled devices and its application to Raman spectroscopy. *Anal. Chem.,* 1992, vol. 64 (21), 2575-2579

- **SAVITZKY A. ; GOLAY, M.J.E.** Smoothing and Differentiation of Data by Simplified Least Squares Procedures. *Analytical Chemistry,* 1964, vol. 36, 1627-1639
- **CLEVELAND, W.S.** Lowess: a program for smoothing scatterplots by robust locally weighted regression. *American Statistician,* 1981, vol. 35 (1), 54
- **ORFANIDIS, S.J.** Introduction to Signal Processing. Prentice-Hall, 1996
- **SAVITZKY, A. ; GOLAY, M.J.E.** Smoothing and Differentiation of Data by Simplified Least Squares Procedures. *Analytical Chemistry,* 1964, vol. 36, 1627-1639
- **DONOHO, D.L. ; JOHNSTONE, I.M. ; KERKYACHARIAN, G. ; PICARD, D.** Wavelet shrinkage: asymptopia. *Jour.Roy. Stat.Soc., Series B,* 1995, vol. 57 (2), 301-369
- **DEVORE, R.A. ; JAWERTH, B. ; LUCIER, B.J.** Image kompression through wavelet transform coding. *IEEE Trans. on Inf. Theory,* 1992, vol. 38 (2), 719-746
- **DONOHO, D.L. ; JOHNSTONE, I.M.** Ideal spatial adaptation by wavelet shrinkage. *Biometrika,* 1994, vol. 81, 425-455
- **DE RIDDER, D. ; LOOG, M. ; REINDERS, M.J.T.** Local Fisher embedding. *Proceedings of the 17th International Conference on Pattern Recognition, 2004,* 2004, vol. 2, 295-298